# EUROPEAN PATENT SPECIFICATION

(11) **EP 0 922 013 B1**
(45) Date of publication and mention of the grant of the patent: **29.05.2002**
(21) Application number: 98936381.7
(22) Date of filing: 23.06.1998
(51) Int. Cl.: C04B 22/06, E21B 33/13

(54) **CEMENTING COMPOSITIONS AND APPLICATION THEREOF TO CEMENTING OIL OR ANALOGOUS WELLS**
ZEMENTZUSAMMENSETZUNGEN UND IHRE VERWENDUNG IN ÖL- ODER ÄHNLICHEN BOHRLÖCHERN
COMPOSITIONS CIMENTAIRES ET APPLICATION DE CELLES-CI A LA CIMENTATION DE PUITS DE PETROLE OU ANALOGUE

(30) Priority: 01.07.1997 FR 9708275
(43) Date of publication of application: 16.06.1999
(73) Proprietor: SOFITECH N.V., 1180 Bruxelles (BE)
(72) Inventor: BARLET-GOUEDARD, Véronique, F-92290 Châtenay Malabry (FR); MAROY, Pierre, F-78530 Buc (FR)
(74) Representative: Hyden, Martin
(86) International application number: EP9803824
(87) International publication number: WO9901397

(56) References cited:
- DE-B- 1 263 572
- GB-A- 2 063 240
- DATABASE WPI Week 9220 Derwent Publications Ltd., London, GB; AN 92-164729 XP002060045 & SU 1 654 540 A (BOREHOLE CONSOLIDATION MUDS) cited in the application
- CHEMICAL ABSTRACTS, vol. 107, no. 12, 21 September 1987 Columbus, Ohio, US; abstract no. 101684j, T. NAGAFUCHI ET AL.: page 322; XP002060043 & JP 61 286252 A (ID.)
- CHEMICAL ABSTRACTS, vol. 92, no. 26, 30 June 1980 Columbus, Ohio, US; abstract no. 219972b, O. NAKAMURA: page 281; XP002060044 & JP 55 003362 A (ID.)
- G.N. CHANGIL'DIN ET AL.: "Ton-Zement-Mörtel zur Zementierung von Gas- und Erdölbohrungen" CHEMISCHES ZENTRALBLATT, no. 11, 1968, page 247 XP002060042

## Description

The present invention relates to techniques for drilling oil, gas, water, geothermal, and analogous wells. More precisely, the invention relates to cementing compositions, particularly those adapted for high temperature wells such as geothermal wells, very deep wells, or more generally wells which suffer thermal attack, in particular by injection of steam to stimulate production and/or subterranean brine attack.

After drilling an oil or analogous well, a casing or a coiled tube is lowered into the well and is cemented over all or part of its length. Cementing primarily serves to prevent fluid exchange between the various formation layers traversed by the well, to prevent gas from rising via the annulus surrounding the casing, or to limit ingress of water into the production well. Its main purpose, of course, is to ensure that the casing is held in place.

In the vast majority of cases, Portland cement is used, which is a material that is essentially constituted by calcium silicates which are hydrated to form a hydrated monocalcic silicate and lime. That hydrous silicate, conventionally known as C-S-H, is a gel which is largely responsible for the cohesion and strength of the set cement. When the temperature exceeds about 100°C, that gel metamorphoses into a highly crystalline phase termed alpha dicalcic silicate α-C₂SH which is much denser that the C-S-H phase with a contraction in the volume and an increase in the porosity of the cement. This results in more rapid disintegration of the cement as its greater porosity also renders it more sensitive to chemical attack such as brine washing or carbon dioxide circulation.

In order to avoid conversion of C-S-H to α-C₂SH, the lime to silica ratio is normally reduced by adding silica in the form of quartz in a proportion of 35% to 40% relative to the weight of Portland cement. Under those conditions, the gel is transformed into tobermorite C₅S₆H₅ at about 110°C then into xonotlite if the temperature is raised to 150°C. Those two minerals have good mechanical strength, but their durability at high temperature and especially their resistance to chemical attack are relatively low. Degradation of the structure is more rapid when the system has already started to degrade, due in particular to an increase in the porosity of the cement. Further, near 250°C, a new mineralogical phase, truscottite (C₇S₁₂H₃) appears which further weakens the cement. The various degradation mechanisms mentioned above are not exhaustive, of course, especially since no mention has been made of the role of the other oxides present in Portland cement, in particular C₃A aluminates, and C₄AF ferrites, but they are sufficient to show the complexity of the phenomena occurring, even without considering the reaction products between the cementing matrix and brines.

Since the disintegration of cement is partly due to an increase in their porosity, it has been proposed to counter this by using plastics additives such as styrene-butadiene latex. However, such additives are themselves rendered unstable by increasing temperature and they retard rather than prevent cement degradation.

Such problems of cement disintegration with rising temperature are felt more keenly in the industry with increasing use of very deep wells, of steam injection to recover very viscous oil, or of geothermal wells for the exploitation of geothermal energy.

The aim of the invention is to propose cementing compositions which can withstand high temperatures, of up to 250°C to 300°C, for example, and which are preferably also capable of resisting chemical attack which is often the consequence in high temperature applications.

The path followed by the inventors was to select a mineralogical phase which is stable at the envisaged temperatures and pressures and to promote its formation by adding a certain quantity of a mineral oxide to a base constituted by Portland cement and silica.

In a first embodiment of the invention, the formation of calcic hydrogarnets from the series [SiO₄]Ca₃M₂³⁺ is promoted, where M = Al (grossularite) or M = Fe (andradite) by the addition of alumina or ferrite. The quantity added is typically in the range 20% to 50% (by weight relative to the weight of Portland cement), i.e., of the same order of magnitude as the added silica.

It should be noted that patent application SU-A-1 654 540 describes a composition for a geothermal well constituted by Portland cement, quartz sand, and a small quantity of an iron cement, a by-product from steel refining, which is relatively rich in alumina (35% to 37% [percentages by weight]), lime (40%), and silica (7% to 10%). It is indicated that adding iron cement encourages hydrogarnet formation, but it should be pointed out that because of the very small quantity of aluminium and iron present in the mixture, only a very small quantity of that very stable mineralogical phase can form. Further, iron cement also provides large quantities of lime while, as indicated above, the principal aim of adding silica is to reduce the lime to silica ratio. Further, the addition of alumina and iron is effected by silico-aluminates which are considered to be reactive while in the invention, the alumina or iron oxides added to promote the hydrogarnets are considered to be of low reactivity.

A particularly preferred composition is constituted by class G Portland cement, 30% to 40% of silica (preferably about 35%) and 20% to 40% of alumina (preferably about 30%). The cement obtained is particularly resistant to persistent thermal shocks at high temperatures, of about 300°C, for example. Further, the grossularite hydrogarnets formed at high temperatures react with brines to produce feldspathoids, i.e., mineral phases which are themselves particularly resistant.

Further details and advantageous characteristics of the invention appear from the following description of tests carried out on different examples of additive compositions, made with reference to the following drawings in which:
- Figure 1 is a phase diagram of a ternary silica/aluminium/calcium system;
- Figure 2 is a graph showing how compressive strength varies after high temperature treatment, for different cement compositions;
- Figure 3 is a diagram showing the test protocol illustrating the resistance of cements to thermal shock;
- Figure 4 is a diagram showing the test protocol illustrating the resistance of cements to "chemical" shock.

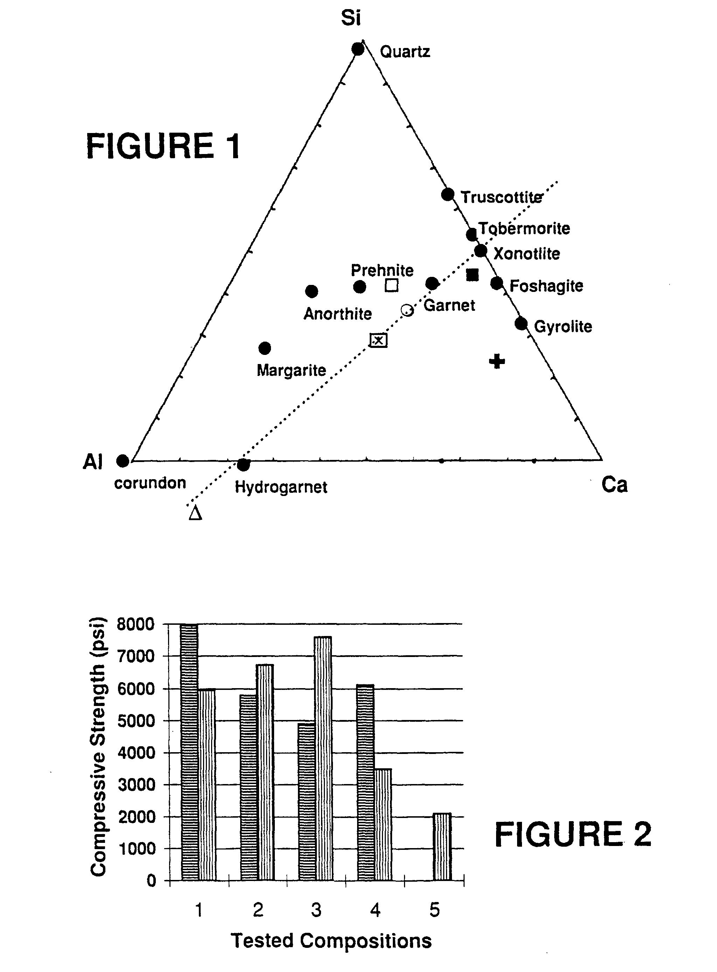

Figure 1 is a phase diagram showing the principal crystalline phases of hydrates found in a silica/aluminium/calcium system which can be obtained at temperatures which are of the order of 100°C to 400°C, represented by the solid circles. It should be noted that a single CaO-SiO₂-H₂O system can form about twenty hydrates which are recorded in the literature and this diagram is therefore not exhaustive.

With a calcium/silica ratio of the order of 2, class G Portland cement (shown on the figure as the symbol +) is in the hillebrandite C₂SH stability region which forms at about 150°C and after conversion of the C-S-H gel to α-C₂SH, itself a compound which culminates in complete disintegration of the cement because of the reduction in the apparent volume of the gel. For this reason, in all applications where the cement is likely to be subjected to temperatures of more than 100°C, silica is added to reduce the calcium/silica ratio.

The symbol ■ corresponds to an addition of 35% of silica (by weight relative to the weight of class G Portland cement) which encourages the formation of tobermorite C₅S₆H₅, a hydrate which forms when the cement is heated to about 100°C and traces of which are found at temperatures of up to almost 250°C. Tobermorite appears to be encouraged by the presence of aluminium.

If the cement is heated to about 150°C, the hydrate continues to lose its water and the tobermorite is gradually replaced mainly by xonotlite C₆S₆H, a hydrate which forms more readily when the silica is supplied in the form of quartz. To a far lesser extent, a small amount of gyrolite is also observed to form. These phases exist up to temperatures of about 400°C, but their formation is also accompanied by an increase in the porosity of the cement which weakens its resistance to chemical attack, in particular by brine or carbon dioxide.

The invention aims to modify the reactions in the cement matrix due to an increase in temperature and pressure to produce new mineral phases, in particular hydrogarnets from the hydrogrossularite series, the structure being derived from calcic garnets Ca₃Al₂Si₃O₁₂ (C₃AS₃) omitting silicon atoms and replacing oxygen atoms to which they are bonded with hydroxyl groups. When all of the silicon atoms have been replaced, C₃AH₆ is obtained.

As will be shown in the tests described below, this promotion of hydrogarnet phases is obtained if the composition is modified to displace it along the straight line Δ, i.e., by adding a certain quantity of alumina. The symbol ○ corresponds to the supplemental addition of 30% of alumina, symbol 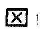 to an addition of 50% of alumina. Finally, the symbol 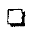 , which is offset from the line Δ, corresponds to a formulation on the same base as formulation ○, by adding a further 30% of microsilica.

For these tests, 5 slurries with a slurry density of 1.96 g/cm³ (16.4 ppg) based on class G Portland cement (Black label) were prepared. The formulations are shown in Table I below. For the liquid constituents (fluid loss control agent and anti-foaming agent), the quantities are shown in gallons per sack of Portland cement (1 gps = 3.78 liters per sack of 94 pounds of cement, i.e., 1 gps = 0.070 liters per kilogram of Portland cement). For all of the other constituents, the quantities are in percentages by weight with respect to the weight of Portland cement (BWOC = By Weight of Cement).

All of the proposed formulations were optimized to obtain a slurry with a rheology which was compatible with pumping into an underground well, necessitating the addition of the quantities of dispersing agent shown.

Composition #1 was a prior art petroleum grade cement for high temperature wells, containing 35% of silica. The other compositions contained 20% to 50% of alumina and for composition #4, an additional 30% of microsilica.

**TABLE I**

| # | 1 | 2 | 3 | 4 | 5 |
|---|---|---|---|---|---|
| **Al**_{**2**}**O**_{**3**} | - | 20 | 30 | 30 | 50 |
| **Silica** | 35 | 35 | 35 | 35 | 35 |
| **Micro-silica** | - | - | - | 30 | - |
| **Dispersant** | 0.3 | 0.7 | 0.7 | 0.7 | 0.7 |
| **Retardant 1** | 0.32 | 0.6 | 0.6 | 0.3 | 0.8 |
| **Retardant 2** | 0.16 | 0.3 | 0.3 | 0.15 | 0.4 |
| **Fluid loss control agent** | 0.6 | 0.6 | 0.6 | 0.6 | 0.6 |
| **Anti-foaming agent 1** | - | 0.05 | 0.05 | 0.05 | 0.05 |
| **Anti-foaming agent 2** | 0.03 | - | - | - | |

Tables II and III show the results obtained regarding the rheology of the slurry (VP, plastic viscosity and yield point Ty). The measurements were carried out under conditions recommended by the API (American Petroleum Institute), at ambient temperature representative of surface conditions when mixing the cement, and at a temperature of 185°C, i.e., the standard circulation temperature downhole.

The values given in Tables II and III indicate that the compositions were well suited to cementing oil or analogous wells.

**TABLE II**

| **Rheology at mixing temperature (20°C)** | | | | | | |
|---|---|---|---|---|---|---|
| | **Plastic viscosity VP** | | **Yield point Ty** | | **Gel strength at 10 min** | |
| **#** | **[cP]** | **[Pa.s]** | **[1bf/100ft**^{**2**}**]** | **[P**_{**a**}**]** | **[Ibf/100ft**^{**2**}**]** | **[Pa]** |
| **1** | 602.1 | 0.602 | 13.3 | 6.4 | 52 | 24.9 |
| **2** | 145.1 | 0.145 | 17.7 | 8.5 | 38 | 18.2 |
| **3** | 100.5 | 0.100 | 15.6 | 7.5 | 33.5 | 16.0 |
| **4** | 100.6 | 0.101 | 21.7 | 10.4 | 37.5 | 17.9 |
| **5** | 71.25 | 0.071 | 20.2 | 9.7 | 47 | 22.5 |

**TABLE III**

| **Rheology after conditioning for 20 minutes at 85°C** | | | | | | |
|---|---|---|---|---|---|---|
| | **Plastic viscosity VP** | | **Yield point Ty** | | **Gel strength at 10 min** | |
| **#** | **[cP]** | **[Pa.s]** | **[lbf/100ft**^{**2**}**]** | **[Pa]** | **[lbf/100ft**^{**2**}**]** | **[Pa]** |
| **1** | 196 | 0.196 | 4.12 | 1.97 | 12 | 5.75 |
| **2** | 61.4 | 0.061 | 10.1 | 4.84 | 22.5 | 10.77 |
| **3** | 45.15 | 0.045 | 8.7 | 4.17 | 19 | 9.10 |
| **4** | 55.26 | 0.055 | 10.2 | 4.88 | 37 | 17.72 |
| **5** | 36.66 | 0.036 | 11.7 | 5.60 | 27 | 12.93 |

Table IV below shows characteristic data for setting cement, in particular its thickening time and compressive strength.

The thickening time is a measurement made, under dynamic conditions, of the time required for the consistency of a slurry to reach 100 BC measured in standardized units. It should be noted that in practice, a slurry with a consistency of more than 70 BC can no longer be pumped without taking special precautions and in order to avoid major accidents, it is normal to pump only slurries with a consistency of less than 30 BC.

Estimates of the rate of development of compressive strength were obtained by measuring the rate of propagation of ultrasound through a sample of setting cement under static conditions at 300°F (148.9°C) (measured using an "Ultrasonic Cement Analyser").

**TABLE IV**

| # | 1 | 2 | 3 | 4 | 5 |
|---|---|---|---|---|---|
| Free water (ml) | 1 | 0 | 0 | 0 | 1 |
| Fluid loss at 300°F (m./30 min) | 30 | not measured | 46 | not measured | not measured |
| Thickening time | 3h00 | 3h39 | 3h10 | 3h23 | 3h29 |
| Compressive strength | | | | | |
| ... 3 days at 300°F (148.9°C) psi N/cm² | 7950 5482 | 5790 3992 | 4896 3376 | 6118 4218 | not measured |
| ... 1 month at 550°F (287.8°C) psi N/cm² | 5958 4108 | 6715 4630 | 7591 5234 | 3479 2399 | 2062 1422 |
| Deformation (10⁻³ mm/kN) | 3.01 | not measured | 3.40 | 3.47 | not measured |
| Estimate of compressive strength development | | | | | |
| ... 50 psi [34 N/cm²] | 3h50 | 4h53 | 5h15 | 3h46 | 7h09 |
| ... 500 psi [848 N/cm²] | 4h38 | 6h53 | 9h09 | 4h23 | 10h51 |
| Compressive strength at 24 h, psi N/cm² | 5028 3467 | 3603 2484 | 3440 2372 | 3309 2282 | 2101 1449 |

The tested formulations were perfectly stable and no tendency to sedimentation was observed, as shown by the free water volumes.

Figure 2 shows the compressive strength after 3 days at 148.9°C - 300°F (horizontal hatching) and 1 month at 287.8°C - 550°C (vertical hatching).

At a temperature of about 150°C, after 3 days, the preferred compositions of the invention (#2 and #3) had a compressive strength of the order of 3500 N/cm² which is very generally considered to be adequate even if this value is substantially lower than that obtained with prior art composition #1. In contrast, if the cement undergoes prolonged thermal attack, it has been shown that rather than decreasing, its compressive strength increases.

Compositions #5 comprising 50% of alumina had a marked retardation in the development of compressive strength and thus are not preferred.

The mechanical properties of composition #4, which in addition to 30% of alumina comprised 35% of microsilica, declined even more rapidly than those of reference composition #1.

Samples were also examined using X rays to study their mineralogical structure and the effect of a thermal shock in water or brine was qualitatively tested.

### Thermal shock

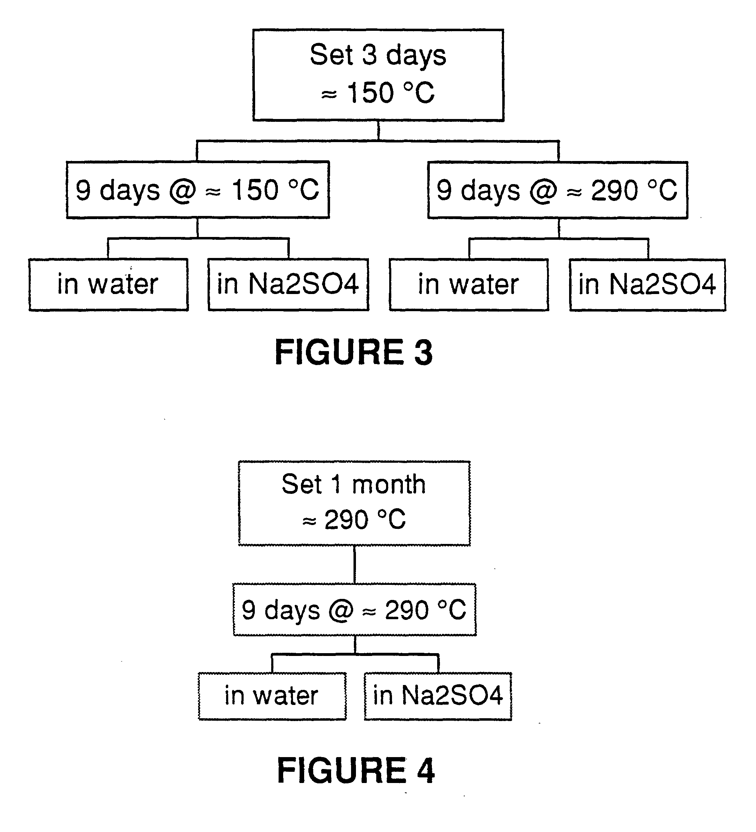

The thermal test was carried out on samples which were allowed to set for 3 days at 300°F (148.9°C). The operating protocol is shown in Figure 3; cement setting and testing were carried out in an autoclave, at a pressure of 3000 psi (208 bars). The crystalline phases were tentatively identified as corresponding to the most probable phases taking into account the micro-analysis and the geometric structure of the observed structures.

After setting for three days, conventional slurry #1 was seen under the electron microscope as a mass of circular vacuoles resembling geodes filled with hexagonal plates. Crystals of C₂SH, a little as-yet unreacted silica and a little "tobermorite" were identified. The apparent composition remained the same for reference samples left at 300°F in water for 9 days but an increase in the number of amorphous compounds and a reduction in porosity were observed. For samples placed at the same temperature but in a brine (water saturated with sodium sulfate), the crystalline compounds identified remained the same but the matrix became essentially constituted by amorphous structures with small plates dispersed in the matrix. There were no visible alterations on a macroscopic scale.

In contrast, samples which underwent a thermal shock (9 days at 287,8°C - 550°F in water or a brine) crumbled merely on contact. In water, the formation of large numbers of needles, identified as xonotlite, was observed. In brine, the presence of pseudocubic crystals was also observed. In both cases, silica and the C₂SH phase had apparently reacted completely.

After setting for three days at 300°F, samples #2 and #3 containing respectively 20% and 30% of alumina appeared to be very similar to prior art samples, apart from the presence of alumina crystals, and a less porous structure for samples containing the most alumina. At this temperature, a period of 9 days in water or brine altered the structure only a little.

After a thermal shock at 550°F in water, the formation of xonotlite and hydrogarnets was observed, the latter being clearly predominant for samples containing the most alumina. After 9 days in a brine at 550°F, there was observed a clear reduction (sample #2) or even almost complete disappearance of the xonotlite (sample #3) accompanied by the formation of a reaction product with the brine, in this case a haüyne type feldspathoid [SiAlO₄)₆|(SO₄)₂₋₁](Na,Ca)₅₋₄. In contrast to the prior art samples, the two samples including added alumina were intact.

The formulations comprising 20% and 30% of alumina were perfectly resistant to thermal shocks in the presence or absence of brine.

### "Chemical" shock

The "chemical" shock test was carried out on samples left for one month at 550°F (287.8°C) then placed for 9 days, at the same temperature, in a bath of water or of brine. The operating protocol is shown in Figure 4 and as before, cement setting and tests were carried out in an autoclave pressurized to 3000 psi (208 bars).

For the conventional cement at the start of the test, the sample principally comprised xonotlite, and also amorphous compounds. Criss-crossed needles were observed which disappeared when the sample was placed in a brine bath to be replaced by small hexagonal prisms.

With cements containing 20% of alumina, the matrix was completely crystallized, with hydrogarnet formation, with no significant evolution after the "chemical" shock.

With a cement which was richer in alumina, it was observed that the alumina had apparently not yet reacted after one month at 550°F, with the alumina oxides disappearing in samples placed in a water bath. In both cases, the structure was a honeycomb structure with the mesh formed by hydrogamets filled with the remaining fibers of xonotlite, which structure could explain the remarkable compressive strength of these cements.

The formation of a feldspathoid, haüyne, was observed for samples undergoing a chemical shock.

## Claims

1. A cementing composition for an oil or analogous well, based on Portland cement and silica and further including alumina and optionally ferrite for promoting the formation of a hydrogarnet phase that is temperature- and pressure- stable; **characterised in that** the alumina and ferrite, when present, encourages the formation of calcic hydrogarnets from the series [SiO₄]Ca₃M³⁺, with M=A1 (grossularite) or M=Fe (andradite); and the alumina is present in a proportion of 20% to 50% (by weight relative to the weight of Portland cement).

2. A cementing composition as claimed in claim 1, **characterised in that** it comprises Portland cement, silica (30% to 40% by weight relative to the weight of Portland cement), and alumina (30% to 40% by weight relative to the weight of Portland cement).

3. Application of cementing compositions as claimed in claim 1 or 2 in the cementing of wells which are continuously or repeatedly subjected to temperatures of 250°C to 300°C.

## Patentansprüche

1. Zementiermischung für ein Öl- oder Gasbohrloch, auf der Basis von Portlandzement und Siliciumoxid und ferner umfassend Aluminiumoxid und gegebenenfalls Ferrit zum Unterstützen der Bildung einer Hydrogranatphase, die temperatur- und druckstabil ist, **dadurch gekennzeichnet, daß** das Aluminiumoxid und Ferrit, falls vorhanden, die Bildung von Calciumhydrogranaten aus der Reihe [SiO₄]Ca₃M³⁺ mit M= A1 (Glossularit) oder M=Fe (Andradit) unterstützt und Aluminiumoxid in einem Anteil von 20% bis 50% (an Gewicht relativ zum Gewicht des Portlandzements) vorhanden ist.

2. Zementiermischung nach Anspruch 1, **dadurch gekennzeichnet, daß** sie Portlandzement, Siliciumoxid (30% bis 40% an Gewicht relativ zum Gewicht des Portlandzements) und Aluminiumoxid (30% bis 40% an Gewicht relativ zum Gewicht des Portlandzements) enthält.

3. Verwendung von Zementiermischungen nach Anspruch 1 oder 2 beim Zementieren von Behrlöchem, die kontinuierlich oder wiederholt Temperaturen von 250°C bis 300°C ausgesetzt werden.

## Revendications

1. Composition de cimentation pour un puits de pétrole ou analogue, à base de ciment Portland et de silice et incluant en outre de l'alumine et éventuellement de la ferrite pour favoriser la formation d'une phase de grenat hydraté (hydrogrenat) qui est stable en température et en pression ; **caractérisée en ce que** l'alumine et la ferrite, quand elle est présente, encouragent le formation de grenats hydratés provenant de la série [SiO4]Ca₃M³⁺, avec M = A1 (grossularite) ou M = Fe (andradite) ; et l'alumine est présente dans une proportion de 20% à 50% (en poids par rapport au poids de ciment Portland).

2. Composition cimentaire selon la revendication 1, **caractérisée en ce qu'**elle comprend du ciment Portland, de la silice (30% à 40% en poids par rapport au poids de ciment Portland) et de l'alumine (30% à 40% en poids par rapport au poids de ciment Portland).

3. Application de compositions cimentaires selon la revendication 1 ou 2 dans la cimentation de puits qui sont soumis de façon continue ou répétée à des températures de 250°C à 300°C.
